# EUROPEAN PATENT SPECIFICATION

(11) **EP 1 684 592 B1**
(45) Date of publication and mention of the grant of the patent: **07.04.2010**
(21) Application number: 04765984.2
(22) Date of filing: 18.10.2004
(51) Int. Cl.: A23G 7/02, A47F 3/04, F25B 21/02

(54) **PRESERVATION IN A COOLED CONDITION AND DISPLAY OF LOOSE CONFECTIONERY PRODUCTS WHICH CAN BE DAMAGED BY HEAT**
KONSERVIERUNG UNTER KÜHLBEDINGUNGEN SOWIE PRÄSENTATION VON LOSEN SÜSSWAREN, DIE DURCH HITZE GESCHÄDIGT WERDEN KÖNNEN
PRESERVATION REFRIGEREE ET PRESENTATION DE CONFISERIES EN VRAC QUI PEUVENT ETRE DETERIOREES PAR LA CHALEUR

(30) Priority: 22.10.2003 EP 03425686
(43) Date of publication of application: 02.08.2006
(73) Proprietor: SOREMARTEC S.A., 6700 Arlon (BE); Ferrero S.p.A., 12051 Alba (Cuneo) (IT); FERRERO OFFENE HANDELSGESELLSCHAFT m.b.H., 35260 Stadtallendorf (DE)
(72) Inventor: MANSUINO, Sergio, I-12084 Mondovi' (Cuneo) (IT)
(74) Representative: Rambelli, Paolo
(86) International application number: PCT/EP2004/011710
(87) International publication number: WO 2005/039304

(56) References cited:
- EP-A- 1 304 534
- DE-A- 2 400 900
- DE-A- 19 700 621
- FR-A- 2 488 500
- GB-A- 2 162 357
- GB-A- 2 214 281
- GB-A- 2 374 918
- US-A- 3 769 805
- US-A- 5 661 979

## Description

The present invention relates to a method for the preservation in a cooled condition of loose confectionery products which can be damaged by heat, for the purpose of promoting the retail sale of such products, even during hot periods.

The invention also relates to a cooling device, particularly for a bar or counter, which is useful for the cooling and display of the above-mentioned confectionery products and to its use for the above-mentioned purposes.

The confectionery products to which the invention relates are products in general which are subject to deterioration of their organoleptic and structural properties when they are exposed to heat, for example, to temperatures above 25-26°C, for more or less extended periods of time and include, but are not limited to:
- pralines, optionally including a creamy or liquid, possibly hydrated, filling,
- pralines with wafer shells coated externally with chocolate or the like and optionally including a filling of the above-mentioned type, and
- confectionery products in general, including: a filling having a liquid, creamy or pasty consistency at ambient temperature (25°C) and possibly a covering (coating) with an unfinished product having a liquid, creamy or pasty consistency at ambient temperature (25°C).

More generally, the products concerned are products the organoleptic characteristics of which are best at temperatures of between 15 and 25°C and which are intended to be consumed at these temperatures.

These products undergo substantial deterioration of their organoleptic properties when they are exposed to temperatures generally above 26°C; with reference to products containing chocolate, the typical deterioration phenomenon is due to softening with consequent blooming of fats which occurs at temperatures of the order of 27-28°C or above.

With reference to filled products, in particular with hydrated or liquid fillings in general, the tendency of the filling to evaporate as a result of exposure to heat leads to an unacceptable deterioration of the product.

For the reasons set out above, the retail sale of the above-mentioned products is generally limited to periods that are characterized by a temperate climate whereas, in summer, it is necessary to withdraw these products from sale both to prevent their deterioration and, for commercial reasons, to prevent the sale of products that may have deteriorated giving rise to dissatisfaction on the part of the consumer, thus damaging the image of the product.

The problem of the retail marketing of these products in hot periods has not yet been solved successfully. The preservation of such products in a refrigerated environment is clearly not satisfactory both because conventional refrigerators are not arranged to maintain a temperate range of temperatures, which is necessary for these products, and because preservation in a refrigerated environment, which does not make the products visible, is not suitable for promoting their sale.

Moreover, preservation in a refrigerated environment, which is generally at temperatures of between 2 and 8°C, causes the products not to be suitable for consumption immediately after they have been removed from the refrigerator.

US-A-5 661 979 describes a storage and display unit to be used for fruit wherein cooling is accomplished by means of a thermoelectric cooling chip.

US-A-3 769 805 describes a display container with a plurality of shelves mounted on a central rotor which is temperature controlled by thermoelectric means including water cooling and fan circulated air.

DE 24 00 900 A describes a unit for preserving and displaying confectionery in a cooled condition including a plurality of shelves in the upper part and an evaporator in the lower part.

A subject of the invention is a method for the preservation in a cooled condition of loose confectionery products which can be damaged by heat, for the purpose of permitting the retail sale thereof as defined in claim 1. In the method of the invention, the products are displayed, arranged in a loose condition, in a cooled container into which a flow of cooled air is supplied, by means of a fan disposed outside the container, through openings in the bottom of the container, and is caused to flow continuously through the tortuous passageways between the products, the air-flow being at least partially extracted from the container in order to be caused to flow (without exchange of matter with the outside environment) in contact with a cold dissipator element (for example, of a Peltier-effect thermoelectric module) disposed on the intake side of the fan.

Another subject of the invention is a device suitable for implementing the above-described method, intended particularly for cooling and displaying loose confectionery products which can be damaged by heat as defined in the appended device claim.

Further characteristics and advantages of the method and of the apparatus according to the invention will become clear from the following detailed description which is given with reference to the appended drawing, in which:
Figure 1 is a schematic view showing a device according to the invention in vertical section, and
Figure 2 is a schematic view showing in vertical section a second embodiment of the device of figure 1.

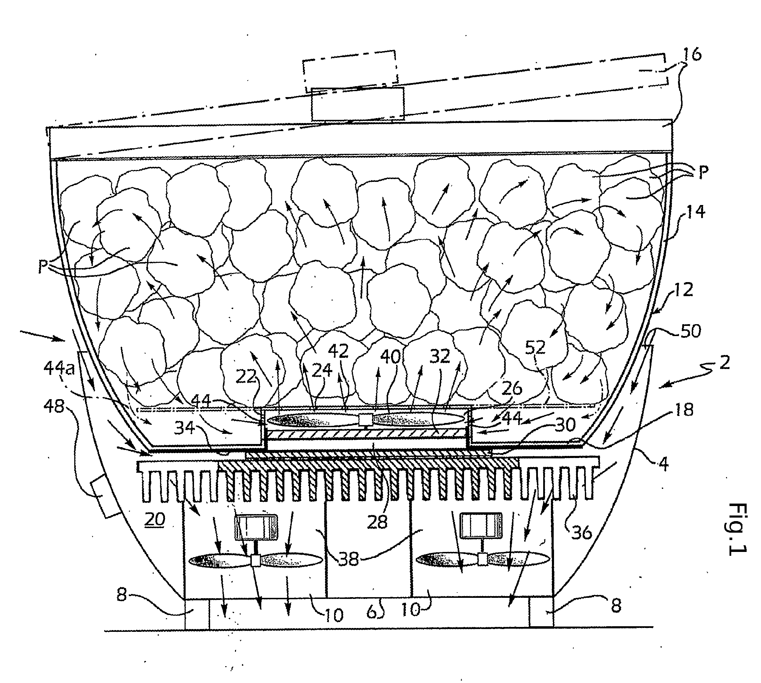

The drawing of figure 1 shows a cooling device 1 for a bar or counter, arranged for the display and cooling of confectionery products P.

The device comprises a base container 2 preferably having a cup-like or bowl-like shape with a side wall 4 and a bottom wall 6. The bottom wall 6 is supported on one or more support elements 8 so that it is raised from the supporting surface and has one or more openings 10 which put the interior of the base container into communication with the outside environment.

An upper container for containing and displaying the confectionery products P is indicated 12. The upper container has a side wall 14, preferably made of transparent material, and preferably has a lid 16 which is preferably transparent and removable or hinged to the body of the container.

A bottom wall 18 of the upper container 12 defines, with the base container 2 and in the interior thereof, a chamber 20. The bottom wall 18 preferably has a recess delimited by a side wall 22 and an upper wall 24 which project towards the interior of the upper container 12. The recess, delimited by the walls 22 and 24, also defines a chamber 26 which is thermally insulated and is not in communication with the chamber 20 of the base container 2.

A Peltier-effect thermoelectric module 28, known *per se*, is disposed in the base container 2 and is formed by a matrix of pairs of semiconductors sandwiched between a lower dissipator 30 (hot plate) and an upper dissipator 32 (cold plate) which is optionally finned. The Peltier module 28 is surrounded by a thermally insulating element 34 in layer form.

Further characteristics of the Peltier thermoelectric module such as, for example, spacer elements and metallization layers are not shown since they are conventional characteristics that are known *per se*.

A conventional finned heat dissipator (for example, made of aluminium), indicated 36, is positioned between the heat dissipator 30 (or hot plate) and one or more electrically-operated fans 38 supported on the bottom wall 6 of the base container 2. A further fan 40 is positioned in the chamber 26, adjacent the cold dissipator 32.

The chamber 26 defined by the bottom 18 of the upper container 12 has in its upper wall 24 a plurality of openings 42 which put the chamber 26 into communication with the interior of the upper container 12; openings 44, which are preferably slot-shaped, are also positioned in the side walls 22 delimiting the chamber 26.

The bottom of the upper container 12 is mounted in a leaktight manner, bearing on the thermally insulating element 34, so that the chamber 26 is separated from the lower chamber 20.

When a direct current is applied to the Peltier module by means of an electrical connection 48 (the internal electrical connections are not shown) heat is absorbed by the dissipator 32, which is cooled, whilst heat is dissipated by the lower dissipator 30, which is heated. The finned dissipator 36 favours the further dissipation of heat.

The electrical supply to the device also operates the fans 38 and 40.

The upper container 12 defines, with the upper edge of the side wall 4 of the base container 2, at least one opening 50 which allows air from the outside environment to enter the chamber 20. The opening 50 is preferably an annular opening adjacent the profile of the upper edge of the wall 4 but may also be constituted by a plurality of angularly spaced-apart openings arranged in a ring.

The operation of the fan or fans 38 causes air to enter from the opening/s 50, producing a flow which flows in contact with the finned heat dissipator 36 and which emerges from the chamber 20 through the openings 10 in the bottom wall 6.

The operation of the fan 40 produces an air-flow which emerges from the chamber 26 through the openings 42 in the upper wall 24 and which flows through the spaces between the products P that are disposed in the upper container 12. The air-flow is at least partially recirculated inside the chamber 26 through the openings 44 formed in the side walls 22 of the chamber 26 and adjacent the intake side of the fan 40. The air-flow flowing through the chamber 26 is cooled in contact with the cold dissipator 32.

The food products, particularly pralines, are preferably arranged loosely, randomly piled up, one over the other, inside the container 12, whereby tortuous air passageways are defined between the products.

The presence of food products P arranged loosely in the container 12 in fact promotes the recirculation of the air-flow from inside the upper container 12 through the openings 44 into the chamber 26, even when the container 12 is open at the top.

The cooled air stream fed inside the container through the openings 42 above the fan 40, flows through the passageways between the products and due to the pressure drop a relevant portion of the air stream is re-circulated back to chamber 26 through openings 44 (or 44a), whereby only a reduced fraction of the cooled air stream may exit from the container when the lid is opened or when the container does not include a lid.

Typically, the temperature inside the container 12 is kept within the range of between 15 and 25°C, preferably between 18 and 22°C, temperature-control means optionally being provided to permit thermostatic control of the desired temperature.

The cooling device is intended particularly for use at retail points of sale of the confectionery products where the products can be displayed inside the container in a cooled condition, so as to promote their purchase.

From the aesthetic point of view, the container may adopt various configurations suitable for attracting the consumer's attention. A preferred configuration in relation to the preservation and sale of pralines is that in which the base container 2 has a bowl-like shape similar to the paper cups in which the pralines are normally inserted, in particular, a bowl-like shape with grooved or pleated side walls; the upper container 2 in this case can preferably adopt a configuration similar to that of the confectionery product contained therein.

Naturally, although the structure of the Peltier-effect cooling means has been described schematically herein, the invention is intended to extend to any cooling means suitable for achieving the above-described functional results.

For example, although in the embodiment shown in figure 1, the cooling means do not comprise a finned dissipator on the cold side, such a dissipator may be used if desired, thus being arranged between the fan 40 and the cold dissipator 32; alternatively, the cold dissipator 32 may itself be finned.

Naturally, the principle of the invention remaining the same, the forms of embodiment and details of construction may be varied widely with respect to those described and illustrated by way of non-limiting example, without departing from the scope of the appended claims.

Thus, for example, the chamber 26 may have a configuration other than that described above; the chamber 26 may be defined at the bottom by the bottom wall 18 of the upper container and at the top by a transverse partition (indicated partially in broken outline and indicated 52 in the drawing of figure 1) disposed above the fan 40 and having, in the region disposed above the fan, openings such as the openings 42 which put the chamber 26 into communication with the interior of the upper container 12, and peripheral openings or an annular opening 44a functionally similar to the openings 44 in the region of the partition that is adjacent the wall 14.

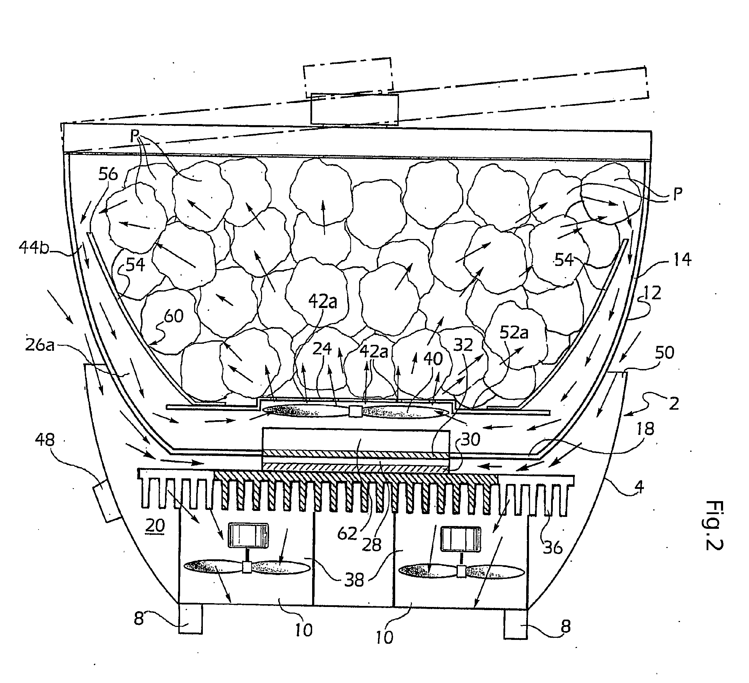

In the embodiment of figure 2, wherein features corresponding to features of figure 1 are indicated with the same reference numbers, an auxiliary container 60 is associated inside the upper container 12, so as to define with the walls of the upper container a chamber 26a for circulation of air.

The auxiliary container 60 comprises a base member 52a (e.g. corresponding to the transverse partition 52), which is associated with the fan assembly 40, and a cup shaped member 54 (e.g. a frusto-conical member) connected on top of or integral with the base member 52a. The walls of the cup shaped member preferably have heat-insulating properties.

The cup shaped member 54, together with the base member 52a define a volume for containing the products P.

The upper edge 56 of the cup shaped member 54 defines with the wall 14 of the upper container an annular opening 44b. The base member 52a, has openings 42a at least in its region above the fan.

In this embodiment a finned cold dissipator 62 may be arranged above the cold dissipator 32.

Between the auxiliary container 60 (namely between the side wall of the cup shaped member 54 and base member 52a) and the side wall 14 and bottom wall 18 of the upper container 12, there is defined a chamber 26a which communicates with the volume inside the auxiliary container through openings 42a and annular opening 44b.

In operation cooled air is fed through openings 42a inside the auxiliary container and is re-circulated back to the cold dissipator through the annular opening 44b.

The device may be provided with a lid and preferably has a lid with an aperture which is constantly opened to allow the introduction of one hand to take the products P.

## Claims

1. A method for the preservation in a cooled condition of loose confectionery products which can be damaged by heat, for the purpose of permitting the retail sale thereof, **characterized in that** the products (P) are displayed in a cooled container (2,12; 60) wherein said products are arranged in a loose condition so that tortuous passageways are defined between the products, a flow of cooled air is supplied into said container by means of a fan (40) disposed outside the container (12; 60), through at least one opening (42, 42a) in the bottom (18; 24) of the container (12; 60), and is caused to flow continuously through the tortuous passageways between the products (P) contained therein, the air-flow being at least partially recovered from the container and caused to flow in contact with a cold dissipator element (32) of a thermoelectric module (28) disposed on the intake side of the fan (40) and wherein the air-flow is cooled so as to maintain a temperature of between 15 and 25°C inside the container (12; 60).

2. A method according to claim 1 in which the air-flow is cooled so as to maintain a temperature of between 18 and 22°C inside the container.

3. A method according to Claim 1 or Claim 2, **characterized in that** the loose confectionery products (P) disposed inside the container (12) comprise pralines having a wafer shell coated with chocolate or the like, pralines having a chocolate shell or the like, or such pralines including a liquid, creamy or pasty, optionally hydrated, filling.

4. A cooling device, particularly for cooling and displaying loose confectionery products (P) which are subject to damage by heat, comprising:
- a base container (2) including in its interior a thermoelectric module (28) interposed between a heat dissipator (30, 36) and a cold dissipator (32),
- at least one first fan (38) adjacent the heat dissipator (30, 36) and one second fan (40) adjacent the cold dissipator (32), respectively, for generating air-flows flowing in contact with the said dissipators, and
- an upper container (12) arranged for containing and for displaying the confectionery products (P), the upper container (12) having a bottom wall (18) and being associated with the base container (2) so as to define within the base container (2) a lower chamber (20) in which the heat dissipator (30, 36) and the respective at least one fan (38) are housed, the lower chamber (20) communicating with the atmosphere through at least one first opening (50) consisting of an annular opening or a plurality of annularly arranged openings defined between the upper edge of the mouth of the base container (2) and the side wall (14) and/or the bottom wall (18) of the upper container (12), and through at least one second opening (10) formed in the bottom (6) of the base container (2), so that the operation of the fan brings about an air-flow flowing in contact with the heat dissipator (30, 36) from the first opening (50) to the at least one second opening (10),
the upper container (12) including a second chamber (26, 26a) which is not in communication with the lower chamber (20) and which includes in its interior the cold dissipator (32, 62) and the respective fan (40), the second chamber (26, 26a) communicating with the interior of the upper container (12) through at least one first opening (42, 42a) and one second opening (44, 44a, 44b) so that the operation of the fan (40) in the second chamber (26, 26a) produces an air-flow circulating inside the upper container (12) and flowing in the chamber (26, 26a) from the second opening (44, 44a, 44b) to the first opening (42, 42a).

5. A cooling device according to Claim 4, **characterized in that** the second chamber (26) is defined by a recess in the bottom wall (18) of the upper container (12), which recess is delimited by a side wall (22) in which a plurality of the second openings (44) are formed, and by an upper wall (24) having the first openings (42), the side wall (22) and the upper wall (24) projecting inside the upper container (12).

6. A cooling device according to Claim 4, **characterized in that** the second chamber (26) is delimited at the bottom by the bottom wall (18) of the upper container (12) and at the top by a transverse partition (52) disposed above the fan (40) associated with the cold dissipator (32).

7. A device according to any one of Claims 4, 5 and 6, **characterized in that** the second chamber (26) is delimited at the bottom by a layer of thermally insulating material (34) surrounding the thermoelectric module (28) and superimposed on the heat dissipator (30).

8. A cooling device according to any one of Claims 4 to 7, **characterized in that** the at least one first opening (50) for allowing ambient air to enter the chamber (20) of the base container (2) is an annular opening (50) defined between the upper edge of the side wall (4) of the base container (2) and the bottom wall (18) and/or side wall (14) of the upper container (12).

9. A cooling device according to any one of Claims 4 to 8, **characterized in that** the heat dissipator comprises a finned dissipator (36).

10. A cooling device according to any one of Claims 4 to 8, **characterized in that** the cold dissipator (32) comprises a finned dissipator.

11. A cooling device according to claim 6, **characterized in that** the second chamber (26, 26a) communicates with the interior of the upper container (12) only through openings (42) in the region of the partition (52) above the fan (40) and through an annular opening (44a) in the region of the partition (52) adjacent the side wall (14).

12. A cooling device according to claim 4, **characterized in that** an auxiliary container (60) is associated within the upper container (12), said auxiliary container including a base member (52a) having openings (42a) in the region above the fan and a cup shaped member (54) which defines a volume for containing the products (P), wherein the upper edge (56) of the cup shaped member (54) defines with the wall (14) of the upper container (12) an annular opening (44b), the lower chamber (26a) communicating with said volume inside the auxiliary container (60) through said openings in the region above the fan (42a) and through said annular opening (44b).

13. Use of a cooling device according to any one of Claims 4 to 12 for cooling and displaying confectionery products that can be damaged by heat.

## Patentansprüche

1. Verfahren zum Erhalt eines gekühlten Zustandes von losen Süßwarenprodukten, die durch Hitze beschädigt werden können zu dem Zweck den Einzelhandelsverkauf davon zu gestatten,
**dadurch gekennzeichnet, dass**
die Produkte (P) in einem gekühlten Behälter (2, 12; 60) dargestellt werden, wobei die Produkte in einem losen Zustand angeordnet sind, so dass sich gewundene Durchgänge zwischen den Produkten ergeben, wobei der Behälter durch einen außerhalb des Behälters (12; 60) angeordneten Lüfter (40) durch zumindest eine Öffnung (42, 42a) in dem Boden (18; 24) des Behälters (12; 60) mit einem Fluss an gekühlter Luft versehen wird und der Fluss dazu gebracht wird kontinuierlich durch die gewundenen Durchgänge zwischen den darin aufgenommen Produkten (P) zu fließen, wobei der Luftfluss zumindest teilweise von dem Behälter wiedergewonnen wird und dazu gebracht wird in Kontakt mit einem Kältedissipatorelement (32) eines thermoelektrischen Moduls (28), das auf der Einlassseite des Lüfters (40) angeordnet ist, zu fließen und wobei der Luftfluss gekühlt wird, um eine Temperatur zwischen 15 und 25°C in dem Behälter (12; 60) zu halten.

2. Verfahren nach Anspruch 1, bei dem der Luftfluss gekühlt wird, um die Temperatur in dem Behälter zwischen 18 und 22°C zu halten.

3. Verfahren nach Anspruch 1 oder 2, bei dem die losen Süßwarenprodukte (P), die in dem Behälter (12) angeordnet sind, Pralinen, die eine mit Schokolade oder dergleichen beschichtete Waffelhülle aufweisen, Pralinen, die eine Schokoladenhülle oder dergleichen aufweisen, oder solche Pralinen, die eine flüssige, eine cremige oder eine teigige, optional hydratisierte, Füllung aufweisen, umfassen.

4. Kühleinrichtung, insbesondere zum Kühlen und darstellen loser Süßwarenprodukte (P), die dazu neigen durch Wärme beschädigt zu werden, umfassend:
einen Basisbehälter (2), der in seinem Inneren ein thermoelektrisches Modul (28), das zwischen einem Wärmedissipator (30, 36) und einem Kältedissipator (32) angeordnet ist, umfasst,
zumindest einen ersten Lüfter (38) neben dem Wärmedissipator (30, 36) bzw. einen zweiten Lüfter (40) neben dem Kältedissipator (32) zum Erzeugen von Luftströmungen, die in Kontakt mit den Dissipatoren fließen, und
einen oberen Behälter (12), der angeordnet ist, um die Süßwarenprodukte (P) aufzunehmen und dazustellen, wobei der obere Behälter (12) eine Bodenwand (18) aufweist und dem Basisbehälter (2) zugeordnet ist, um innerhalb des Basisbehälters (2) eine untere Kammer (20) festzulegen, in der der Wärmedissipator (30, 36) und der entsprechende zumindest eine Lüfter (38) untergebracht sind, wobei die untere Kammer (20) mit der Atmosphäre durch zumindest eine erste Öffnung (50), die aus einer ringförmigen Öffnung oder einer Vielzahl an ringförmig angeordneten Öffnung besteht, die zwischen dem oberen Rand der Mündung es Basisbehälters (2) und der Seitenwand (14) und/oder der Bodenwand (18) des oberen Behälters (12) festgelegt sind, und durch zumindest eine zweite Öffnung (10), die in dem Boden (6) des Basisbehälters (2) ausgebildet ist, in Verbindung steht, so dass der Betrieb des Lüfters eine Luftströmung herbeiführt, die in Kontakt mit dem Wärmedissipator (30, 36) von der ersten Öffnung (50) zu der zumindest einen zweiten Öffnung (10) fließt,
wobei der obere Behälter (12) eine zweite Kammer (26, 26a), die nicht in Verbindung mit der unteren Kammer (20) steht und die in ihrem Inneren den Kältedissipator (32, 62) und den entsprechenden Lüfter (40) aufweist, umfasst, wobei die zweite Kammer (26, 26a) mit dem Inneren des oberen Behälters (12) durch zumindest eine erste Öffnung (42, 42a) und eine zweite Öffnung (44, 44a, 44b) in Verbindung steht, so dass der Betrieb des Lüfters (40) in der zweiten Kammer (26, 26a) eine Luftströmung erzeugt, die in dem oberen Behälter (12) zirkuliert und in der Kammer (26, 26a) von der zweiten Öffnung (44, 44a, 44b) zu der ersten Öffnung (42, 42a) fließt.

5. Kühleinrichtung nach Anspruch 4, **dadurch gekennzeichnet, dass** die zweite Kammer (26) durch eine Ausnehmung in der Bodenwand (18) des oberen Behälters (12) festgelegt wird, wobei die Ausnehmung durch eine Seitenwand (22), in der eine Vielzahl der zweiten Öffnungen (44) ausgebildet sind und durch eine obere Wand (24) mit den ersten Öffnungen (42), begrenzt wird, wobei die Seitenwand (22) und die obere Wand (24) sich in den oberen Behälter (12) erstrecken.

6. Kühleinrichtung nach Anspruch 4, **dadurch gekennzeichnet, dass** die zweite Kammer (26) durch den Boden der Bodenwand (18) des oberen Behälters (12) und an der Oberseite durch einen Querabschnitt (52), der über dem mit dem Kältedissipator (32) assoziierten Lüfter (40) angeordnet ist, begrenzt wird.

7. Einrichtung nach einem der Ansprüche 4, 5 und 6, **dadurch gekennzeichnet, dass** die zweite Kammer (26) an dem Boden durch eine Schicht an thermisch isolierendem Material (34), das das thermoelektrische Modul (28) umgibt und über dem Wärmedissipator (30) angeordnet ist, begrenzt ist.

8. Kühleinrichtung nach einem der Ansprüche 4 bis 7, **dadurch gekennzeichnet, dass** an zumindest einer ersten Öffnung (50), um es der Raumluft zu gestatten in die Kammer (20) des Basisbehälters (2) einzudringen, eine ringförmige Öffnung (50) zwischen dem oberen Rand der Seitenwand (4) des Basisbehälters (2) und der Bodenwand (18) und/oder der Seitenwand (14) des oberen Behälters (12) festgelegt ist.

9. Kühleinrichtung nach einem der Ansprüche 4 bis 8, **dadurch gekennzeichnet, dass** der Wärmedissipator einen gerippten Dissipator (36) umfasst.

10. Kühleinrichtung nach einem der Ansprüche 4 bis 8, **dadurch gekennzeichnet, dass** der Kältedissipator (32) einen gerippten Dissipator umfasst.

11. Kühleinrichtung nach Anspruch 6, **dadurch gekennzeichnet, dass** die zweite Kammer (26, 26a) mit dem Inneren des oberen Behälters (12) nur durch Öffnungen (42) im Teilbereich (52) über dem Lüfter (40) und durch eine ringförmige Öffnung (44a) in dem Teilbereich (52) neben der Seitenwand (14) in Verbindung steht.

12. Kühleinrichtung nach Anspruch 4, **dadurch gekennzeichnet, dass** ein Hilfsbehälter (60) innerhalb des oberen Behälters (12) verbunden ist, wobei der Hilfsbehälter ein Basiselement (52a) mit Öffnungen (42a) in dem Bereich über dem Lüfter und mit einem becherförmigen Element (54), das ein Volumen zum Aufnehmen der Produkte (P) festlegt, umfasst, wobei der obere Rand (56) des becherförmigen Elementes (54) mit der Wand (14) des oberen Behälters (12) eine ringförmige Öffnung (44b) festlegt, wobei die untere Kammer (26a) mit dem Volumen in dem Hilfsbehälter (60) durch die Öffnungen in dem Bereich über dem Lüfter (42a) und durch die ringförmigen Öffnungen (44b) in Verbindung steht.

13. Verwendung einer Kühleinrichtung nach einem der Ansprüche 4 bis 12, zum Kühlen und Darstellen von Süßwarenprodukten, die durch Hitze beschädigt werden können.

## Revendications

1. Procédé pour préserver en condition réfrigérée des produits de confiserie en vrac qui peuvent être détériorés par la chaleur, dans le but de permettre leur vente au détail, **caractérisé en ce que** les produits (P) sont exposés dans un conteneur réfrigéré (2, 12 ; 60) dans lequel lesdits produits sont agencés en vrac de sorte que des passages sinueux soient définis entre les produits, un flux d'air réfrigéré est fourni dans ledit conteneur au moyen d'un ventilateur (40) disposé à l'extérieur du conteneur (12 ; 60), à travers au moins une ouverture (42, 42a) au fond (18 ; 24) du conteneur (12 ; 60), et est amené à circuler en continu à travers les passages sinueux entre les produits (P) qu'il contient, le courant d'air étant au moins partiellement récupéré du conteneur et amené à circuler au contact d'un élément (32) dissipateur de froid d'un module thermoélectrique (28) disposé côté admission du ventilateur (40) et dans lequel le courant d'air est réfrigéré de sorte à garder une température entre 15 et 25°C à l'intérieur du conteneur (12 ; 60).

2. Procédé selon la revendication 1 dans lequel le courant d'air est réfrigéré de sorte à garder une température entre 18 et 22°C à l'intérieur du conteneur.

3. Procédé selon la revendication 1 ou la revendication 2, **caractérisé en ce que** les produits de confiserie en vrac (P) disposés à l'intérieur du conteneur (12) comprennent des pralines ayant un habillage gaufré enrobé de chocolat ou similaire, des pralines ayant un habillage chocolaté ou similaire, ou de telles pralines comportant un fourrage liquide, crémeux ou pâteux, facultativement hydraté.

4. Dispositif de réfrigération, en particulier pour réfrigérer et exposer des produits de confiserie en vrac (P) qui peuvent être détériorés par la chaleur, comprenant :
- un conteneur de base (2) comportant à l'intérieur un module thermoélectrique (28) interposé entre un dissipateur de chaleur (30, 36) et un dissipateur de froid (32),
- au moins un premier ventilateur (38) adjacent au dissipateur de chaleur (30, 36) et un deuxième ventilateur (40) adjacent au dissipateur de froid (32), respectivement, pour générer des courants d'air circulant au contact desdits dissipateurs, et
- un conteneur supérieur (12) agencé pour contenir et exposer les produits de confiserie (P), le conteneur supérieur (12) ayant une paroi de fond (18) et étant associé au conteneur de base (2) de façon à définir dans le conteneur de base (2) une chambre inférieure (20) dans laquelle sont logés le dissipateur de chaleur (30, 36) et l'au moins un ventilateur (38) respectif, la chambre inférieure (20) communiquant avec l'air ambiant à travers au moins une première ouverture (50) consistant en une ouverture annulaire ou de plusieurs ouvertures agencées de manière annulaire définies entre le bord supérieur du goulot du conteneur de base (2) et la paroi latérale (14) et/ou la paroi de fond (18) du conteneur supérieur (12), et à travers au moins une deuxième ouverture (10) formée au fond (6) du conteneur de base (2), de sorte que le fonctionnement du ventilateur provoque un courant d'air circulant au contact du dissipateur de chaleur (30, 36) depuis la première ouverture (50) jusqu'à l'au moins une deuxième ouverture (10),
le conteneur supérieur (12) comportant une deuxième chambre (26, 26a) qui ne communique pas avec la chambre inférieure (20) et qui comporte à l'intérieur le dissipateur de froid (32, 62) et le ventilateur (40) respectif, la deuxième chambre (26, 26a) communiquant avec l'intérieur du conteneur supérieur (12) à travers au moins une première ouverture (42, 42a) et une deuxième ouverture (44, 44a, 44b) de sorte que le fonctionnement du ventilateur (40) dans la deuxième chambre (26, 26a) produise un courant d'air circulant à l'intérieur du conteneur supérieur (12) et circulant dans la chambre (26, 26a) depuis la deuxième ouverture (44, 44a, 44b) jusqu'à la première ouverture (42, 42a).

5. Dispositif de réfrigération selon la revendication 4, **caractérisé en ce que** la deuxième chambre (26) est définie par un évidement dans la paroi de fond (18) du conteneur supérieur (12), lequel évidement est délimité par une paroi latérale (22) dans laquelle une pluralité des deuxièmes ouvertures (44) sont formées, et par une paroi supérieure (24) ayant les premières ouvertures (42), la paroi latérale (22) et la paroi supérieure (24) se projetant à l'intérieur du conteneur supérieur (12).

6. Dispositif de réfrigération selon la revendication 4, **caractérisé en ce que** la deuxième chambre (26) est délimitée au fond par la paroi de fond (18) du conteneur supérieur (12) et en haut par une cloison transversale (52) disposée au-dessus du ventilateur (40) associé au dissipateur de froid (32).

7. Dispositif selon l'une quelconque des revendications 4, 5 et 6, **caractérisé en ce que** la deuxième chambre (26) est délimitée au fond par une couche d'un matériau (34) d'isolation thermique entourant le module thermoélectrique (28) et superposée sur le dissipateur de chaleur (30).

8. Dispositif de réfrigération selon l'une quelconque des revendications 4 à 7, **caractérisé en ce que** l'au moins une première ouverture (50) pour permettre à l'air ambiant d'entrer dans la chambre (20) du conteneur de base (2) est une ouverture annulaire (50) définie entre le bord supérieur de la paroi latérale (4) du conteneur de base (2) et la paroi de fond (18) et/ou la paroi latérale (14) du conteneur supérieur (12).

9. Dispositif de réfrigération selon l'une quelconque des revendications 4 à 8, **caractérisé en ce que** le dissipateur de chaleur comprend un dissipateur à ailettes (36).

10. Dispositif de réfrigération selon l'une quelconque des revendications 4 à 8, **caractérisé en ce que** le dissipateur de froid (32) comprend un dissipateur à ailettes.

11. Dispositif de réfrigération selon la revendication 6, **caractérisé en ce que** la deuxième chambre (26, 26a) communique avec l'intérieur du conteneur supérieur (12) uniquement à travers des ouvertures (42) dans la région de la cloison (52) au-dessus du ventilateur (40) et à travers une ouverture annulaire (44a) dans la région de la cloison (52) adjacente à la paroi latérale (14).

12. Dispositif de réfrigération selon la revendication 4, **caractérisé en ce qu'**un conteneur auxiliaire (60) est associé dans le conteneur supérieur (12), ledit conteneur auxiliaire comportant un élément de base (52a) ayant des ouvertures (42a) dans la région au-dessus du ventilateur et un élément (54) en forme de coupe qui définit un volume pour contenir les produits (P), dans lequel le bord supérieur (56) de l'élément (54) en forme de coupe définit avec la paroi (14) du conteneur supérieur (12) une ouverture annulaire (44b), la chambre inférieure (26a) communiquant avec ledit volume à l'intérieur du conteneur auxiliaire (60) à travers lesdites ouvertures dans la région au-dessus du ventilateur (42a) et à travers ladite ouverture annulaire (44b).

13. Utilisation d'un dispositif de réfrigération selon l'une quelconque des revendications 4 à 12 destiné à réfrigérer et à exposer des produits de confiserie qui peuvent être détériorés par la chaleur.
